# EUROPEAN PATENT SPECIFICATION

(11) **EP 1 413 095 B1**
(45) Date of publication and mention of the grant of the patent: **07.03.2007**
(21) Application number: 01944080.9
(22) Date of filing: 27.06.2001
(51) Int. Cl.: H04L 12/46

(54) **SYSTEM AND METHOD FOR PROVIDING SERVICES IN VIRTUAL PRIVATE NETWORKS**
SYSTEM UND VERFAHREN ZUR BEREITSTELLUNG VON DIENSTEN IN VIRTUELLEN PRIVATNETZEN
SYSTEME ET PROCEDE DE GENERATION DE SERVICES DANS DES RESEAUX VIRTUELS PRIVES

(43) Date of publication of application: 28.04.2004
(73) Proprietor: Hyglo Systems AB, 126 75 Stockholm (SE)
(72) Inventor: BYSTRÖM, Leif, S-126 34 Hägersten (SE)
(74) Representative: Akerman, Marten Lennart
(86) International application number: PCT/SE2001/001474
(87) International publication number: WO 2003/003666

(56) References cited:
- EP-A2- 1 093 254
- WO-A2-01/43392
- US-A- 6 092 200
- US-A- 6 158 011

## Description

### Field if the invention

The invention relates in general to computer networks and more in particular to enabling mechanisms for delegation and distribution of centralised network server functions to the edge of computer networks. More specifically the invention relates to the problem of providing services to clients in virtual private networks.

### Background

Most enterprises are located at multiple sites where each site has its own local area network (LAN). A site is defined as anything from a head-quarter, or an affiliation company site, to a single employee's remote office site. Some kind of communication infrastructure is then used to interconnect the different sites. The Internet evolution can roughly be categorised into two main areas:
a) Internet as the global communication infrastructure. Traditionally, companies used so called leased lines, provided by telephone companies to interconnect their sites. Separated firewall solutions were used for accessing the Internet. During the last years, companies are no longer using Internet only for external communication, more and more companies are trying out new network solutions that enables them to also use Internet for company-internal communication. Internet has become their site-to-site interconnecting medium.
b) Broadband Internet access. In parallel with the above, more and more broadband access solutions are rolled out by different network access providers. This enables anyone to upgrade their access to Internet from a traditional dial-up PSTN/ISDN (Public Switched Telephone Network/Integrated Services Digital Network) access solution to a broadband solution, e.g. ADSL (Asymmetric Digital Subscriber Line), Cable or Ethernet, with direct access to Internet. Apart from the obvious broadband benefits, the network access user is also able to always be connected to the Internet.

The common name for most of the network solutions that interconnects multiple sites over Internet is "virtual private networks" (VPN). VPNs can be implemented in numerous ways, this is well explained in e.g. the IETF by B. Gleeson et. al, "A Framework for IP Based Virtual private Networks", RFC 2764, February 2000. A VPN is a private network that is configured within a public network. For years, common carriers have built VPNs that appear as private national or international networks to the customer, but physically share backbone trunks with other customers. VPNs enjoy the security of a private network via access control and encryption, while taking advantage of the economies of scale and built-in management facilities of large public networks. Today, there is tremendous interest in VPNs over the Internet, especially due to the constant threat of hacker attacks. The VPN adds that extra layer of security, and a huge growth in VPN use is expected. In general, the different VPN solutions can be categorized into two main groups; customer premises equipment (CPE) based solutions or network based solutions.

Internet is a public data network based on network paradigms such as equal and best effort traffic treatment. All traffic crossing the Internet is public and insecure resulting in a number of problems that need to be solved, e.g. end-to-end security communication between enterprise sites. Some problems have solutions supported by several VPN system vendors, such as encrypted IP tunnelling between end-users using the IPSec architecture described by S. Kent and R. Atkinson in "Security Architecture for the Internet Protocol", RFC 2401, November 1998, or stand-alone firewall solutions, desktop software VPN clients. e.g. Microsoft® VPN, etc. A PC that is connected to Internet can, not easily but it is possible, be used as a transit node by a hacker, e.g. the hacker could use a Trojan horse program to get inside the PC. Well inside, the Trojan horse program may be adapted to release application software that will act as some authenticated software installed by the owner of the PC. It is very difficult for layer 2 and 3 firmware/software to detect this kind of malicious applications. Therefore, it is recommendable to have VPN control and management software and firmware functions and end-user applications, such as service login software, "authenticated" software applications that in some way uses the network infrastructure provided by the VPN service, separated on different hardware platforms. What generally should be avoided, is having PC clients that are responsible for configuring the actual VPN setup, i.e. having access to the lookup-table for other VPN members public IP addresses, having access to information on how to authenticate, perform integrity check and encrypt traffic aimed for the VPN etc.

Normally, users connected to the Internet are only limited in their use of services by how their firewall accepts or declines the use of distributed services. In order to be able to access a certain service, firewall settings need to be changed, and permissions are granted for the specific configuration setting that map to the service to which access is needed. A problem arises when users are connected to a Virtual Private Network (VPN), where services outside the VPN are inaccessible to the user, due to the logical separation of the VPN and the physical network. In a way, the separation of the VPN from the physical network can be seen as a firewall configured to block all traffic between the two networks. Services outside the VPN are inaccessible from within the VPN, and vice versa. Any service that needs to be accessed from within a VPN may be
- an integrated part of the VPN, e.g. a DHCP server within the VPN driver of the client system, DHCP (Dynamic Host Configuration Protocol) being a software that automatically assigns IP addresses to client stations logging onto an IP network. This is a commonly used way of assigning IP addresses dynamically to hosts on the local network. Normally, each client computer receives a free IP address when booting. This address then has to be renewed with a time interval, to ensure that the DHCP server does not run out of free addresses;
- inside the VPN, running as a normal service on a server connected to the VPN;
- outside the VPN, i.e. normally inaccessible from the VPN; any other service that could provide a feature to the users of the VPN.

The use of an administrative server connected to a VPN is also disclosed in WO-A-0 143 392.

There is normally no way of providing easy access to all kinds of services within or outside the VPN, since there exists no way to map services to their logical representation in a way that is useful for a user of the VPN. A service might be inside, outside, or an integral part of the VPN system, and in practice, these differences make the configuration of services hard work for the systems administrator.

### Summary of the invention

According to first aspect the invention relates to a system for providing a service to a client in a virtual network, which virtual network resides on but is logically separated from a physical network. In said system a network service is located in a server, and a logical representation of the network service is provided. This logical representation is connected to the virtual network by a virtual administrative interface.

Preferably said logical representation includes a mapping to the network service, thereby representing a virtual service accessible to said client.

According to an embodiment of the invention said logical representation makes said network service replaceable without changing configuration of the virtual network system. Preferably said service is configured to be experienced by said client as a part of the virtual network.

Said network service may be a service running on the server, currently connected to the virtual network. In such case, said logical representation is preferably directly connected to said server. Alternatively, said network service is a service running on the server, which server is located outside the virtual network, where special access rules define how the server might be accessed and by whom. In such case, the logical representation is connected to said server through said physical network.

In one embodiment said virtual administrative interface is configured to allow client users to perform predetermined administrative functions themselves, such as subscribing/unsubscribing themselves to certain services. Preferably said physical network is an Internet Protocol network.

According to a second aspect of the invention, a method is provided for taking the steps described in this application, for providing virtual services in a virtual private network.

### Brief description of the drawings

Preferred embodiments of the invention are described below with references being made to the drawings, on which
Fig. 1 illustrates the system overview according to an embodiment of the present invention;
Fig. 2 illustrates traffic monitoring and session overtaking according to an embodiment of the present invention;
Fig. 3 illustrates the logical representation of services for a virtual network, according to an embodiment of the invention; and
Fig. 4 illustrates the connection between the actual service and the interface towards clients of the virtual network, according to an embodiment of the present invention.
Fig. 5 illustrates an emulated LAN on top of a global IP network, according to an embodiment of the invention.

### Detailed description of preferred embodiments

According to one aspect, the system according to the present invention is based on a standard IP network like the public Internet. The system comprises multiple VPN clients and at least one server. One server can be a distributed cluster of physical boxes. The VPN clients could be implemented as drivers on the client computer but are for security reasons preferably implemented in a stand alone hardware box. A purpose of this mechanism is to establish dynamic and secure Virtual Local area Networks between some or all of the clients. A virtual network is created by establishing connection groups in a VPN server. The server has a service device for keeping track of connected machines and mapping them to IP addresses. In one embodiment this is obtained using ARP (Address Resolution Protocol), an IP protocol used to obtain a node's physical address. A client station sends an ARP request to the VPN server with the VPN internal IP address of the target node it wishes to communicate with, and the VPN server responds by sending back the external IP address so that packets can be transmitted. ARP returns the layer-2 address for a layer-3 address. This mechanism also handles distribution of public keys to form complete security associations. For handling broadcasts an emulated broadcast service is implemented in the server, preferably using an IP multicast group or as a separate broadcast service. Data sent directly from one machine in the virtual network to another is tunnelled over IP directly to the IP address of the receiving client. The mechanism includes both the case where data packets are tunnelled directly over IP and when an layer-2 media such as Ethernet is bridged onto the IP network.

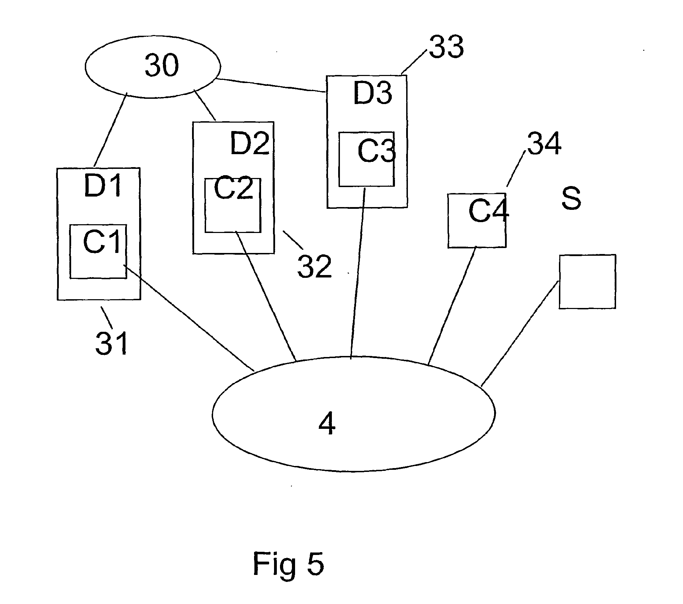

Fig. 5 illustrates an embodiment of the system according to the present mechanism, wherein a network 4 comprises five nodes; four VPN clients 31 - 34 with global addresses C1 - C4, and a server S. All of these are connected to and have a valid address in the physical network 4. These nodes are interconnected using standard Internet routing procedures, but the clients 31 - 34 are not on the same LAN. On top of this network infrastructure, clients 31, 32 and 33 form a virtual network 30 with local addresses D1, D2 and D3. In the illustrated case the clients in this VPN appear to be on the same local area network. The reason for this is the broadcast service, i.e. the service device, which delivers all packets for the local broadcast domain to all machines on the VPN 30. Thus service discovery mechanisms or layer-2 ARP operate transparently on top of the virtual network. When client 31 on the VPN wants to transmit a packet directly to client 32 the client-software requests the physical address C2 from server S, based upon the local address D2, and possible security keys required for talking to D2 from S. D1 is then able to transmit the packet in a secure tunnel directly to D2 without passing the server S.

The above provides an effective and user friendly mechanism for establishing Virtual Private Networks over generic IP connections. Broadcast services and service discovery protocols that normally require a direct layer-2 interconnection may work independently of the actual network structure. It also provides the possibilities of distributed network broadcast handling, where rules and configuration options may be cached in the end nodes of the network instead of in a centralised server. The described mechanism is unique in that it presents a complete distributed emulated LAN on top of an IP network where access and attributes such as security associations are completely controlled by a server. Most current solutions uses static tunnels. Either permanent connections are set up between the members of the VPN or tunnel servers which basically works as modem pools only you "dial" an IP number. This means that all traffic no matter it's final destination goes through this one box. In particular traffic going to sites in the VLAN (Virtual LAN) other than that of the VLAN server comes in through the server access and turns. The broadcast service allows service discovery protocols designed for local networks to function on the VPN while the ARP mechanism allows for dynamic establishment of secure tunnels directly between endpoints. The well known LANE (LAN Emulation) standard was focused entirely on ATM (Asynchronous Transfer Mode) and featured no integrated security handling. Lane introduces, inter alia, the ability to connect Ethernet and Token Ring networks together via ATM. LANE makes the process transparent, requiring no modification to Ethernet and Token Ring stations. LANE allows common protocols, such as IP, IPX, AppleTalk and DECnet, to ride over an ATM backbone. LAN emulation has been implemented and verified over ATM. However, since the system architecture itself by design avoids sending all data through the server, the bottleneck problem with overloaded server links is completely avoided.

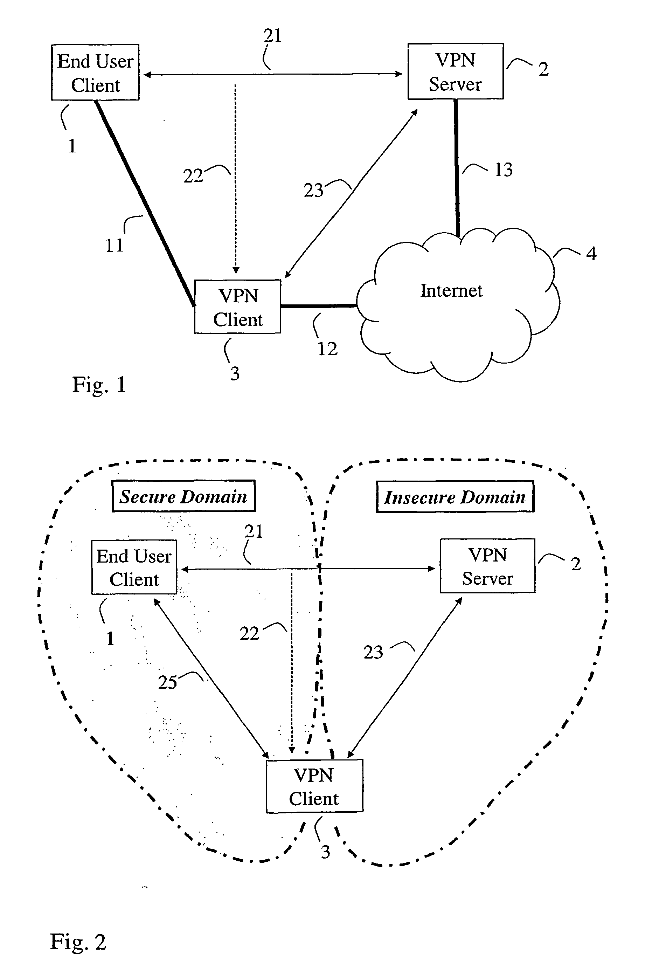

In general, the target system relies on a decision scheme for a third-party overtaking of a client role in a two-party communication session. Turning to Fig. 1, the system processes comprises end user clients located at the end user premises equipment 1, a central VPN system server 2, and network edge located VPN system clients 3. Full lines indicate physical communication lines, whereas arrows indicate communicating ends, without specifying which route the communication takes between those communicating ends. As previously described VPN is a commonly used term to describe a logical network residing on top of an actual, physical network, or networks. To the users and client applications, the logical network behaves just like a normal network, but the networks perimeters and boundaries are not specified by a physical or network-based topology, but by a logical description of its rules and components

The end user client process preferably resides in a PC, the VPN client process preferably resides within a standalone hardware unit, and the VPN server process resides within any kind of Server hardware unit, such as an IBM® Server. By process is here meant the functionality for the particular client or server, as described herein. The VPN server 2 and the VPN client 3 are parts of a VPN system that provides the end user client 1 with access to required VPNs. The end user client 1 hardware is physically connected via a communication line 11 to the VPN client 3 hardware. The VPN client 3 hardware is physically connected to a layer-two termination that enables the VPN client 3 to access Internet over a communication line 12. The layer-two protocol is preferably Ethernet but could practically be any known layer-two protocol used for the encapsulation and transport of IP (Internet Protocol) packets between IP nodes. The VPN server 2 is connected to Internet via a communication line 13 in the same way as the VPN client 3.

According to an embodiment of the target system the end user client 1 initiates a communication session with the VPN server 2 in order to acquire access to a virtual private network. During the initialisation phase, the VPN server 2 authenticates and authorizes the end user client 1 as a registered user of VPN services that are provided by the VPN server 2. The VPN client 3 is passive in that it does not initiate any new information elements during the initialisation phase. The VPN client 3 also monitors 22 the communication 21 between the end user client 1 and the VPN server 2.

When the initialisation phase between the end user client 1 and the VPN server 2 is finished, and when information has been exchanged, regarding particular VPN that the end user clients request access to, then the VPN client 3 becomes active and takes over the communication session between the end user client 1 and the VPN client 3. The VPN client 3 now requests, if it is necessary because the VPN information can already be cached by the VPN client 3, VPN configuration data from the VPN server 2. The VPN client 3 uses the configuration data to configure necessary VPN access parameters such as traffic classification parameters, performance assurance parameters, or firewall parameters such as encryption, authentication, filtering parameters, etc.

The end user client 1 is allowed to use different VPN servers 2 but cannot have simultaneous access to more than one VPN server 2. The VPN client 3 detects when an end user client 1 tries to access a certain server 2. At this moment the VPN server 2 is considered insecure until the end user client 1 has authenticated the VPN server 2 and also have been authenticated by the VPN server 2.

The monitoring and session overtaking scenarios are described more in detail in Fig. 2. The VPN client 3 has one trusted domain, which is the end user client 1 side, and one distrusted domain, the Internet domain. From the VPN client's 3 point of view, the VPN server 2 is therefore located in the distrusted domain. Since all in-and outgoing IP traffic to/from the end user client passes through the VPN client 3 hardware, the VPN client 3 is able to monitor the communication 21 between the end user client 1 and the VPN server 2. This is true if, and only if, the IP traffic not is encrypted in such a way that the VPN client 3 is unable to decrypt the IP traffic. The VPN client 3 software resides on hardware that physically interconnects the end user client 1 with Internet 4. The VPN client 3 is therefore able to monitor 22 all traffic 21 between the end user client 1 and different VPN servers 2 to whom the end user client 1 are registered as user.

The VPN client 3 identifies when the end user client 1 starts to establish contact with a VPN server 2. The VPN client 3 treats the end user client 1 side as a trusted party and the VPN server 2 as a distrusted party. The session establishment phase 21 between the end user client 1 and the VPN server 2 could be done in numerous ways, e.g. by a traditional challenge/response handshaking sequence. The communication 21 is primarily meant to be done by web based clients but other client/server process environment solutions are possible. When the handshaking sequence between the end user client 1 and the VPN server 2 has finished, the VPN client 3 takes over the communication session. The handshaking is considered finished when the VPN server 2 has authenticated and authorised the end user client 1, and acknowledged the end user client 1 as a confirmed user. The VPN client 3 will from now on undertake proxy roles towards both the end user client 1 and the VPN server 2. Towards the end user client 1, the VPN client 3 will act as a VPN server proxy, and towards the VPN server 2 as an end user client proxy. The end user client 1 will continue it's session in belief that it still communicates with the VPN server 2. The VPN client 3 will, using the VPN server proxy role, continue the VPN setup session with the end user client 1.

Further on, the VPN client 3 is now considering the VPN server 2 as a secure source and starts up communication sessions 23 with the VPN server 2 that enables the end user client 1 to be included as members in the requested VPN.

In one embodiment the target system is implemented in a service provisioning system, where parts of the service functionality are distributed to system clients acting as server proxies. One technical advantages of the present system is that any hacker intrusions via an end user PC 1 are avoided by having critical software/firmware for control and management of VPN configuration data separated on standalone hardware 3. Another advantage is the automated overtaking of certified sessions. Another benefit is the plug-and-play behaviour for virtual services over Internet, which is made available through the system. The teachings of the present system thus differs from prior art technology, since earlier solutions to the problem have either been centralised server solutions, such as PSTN/ISDN modem-pool solutions, server centralised IP Sec tunnelling etc, or distributed solutions, which are only valid within one network operator intra-domain or within federated network operator domains. These solutions are generally referred to as network based VPN systems. The present system will function independently of whether or not the different VPN client users access the same network operator domain or a federated network domain or have access to totally independent network operator domains.

The present invention solves the problem of having strict boundaries and rules for what a service is supposed to be in a VPN. By applying the concept of virtual services as a mapping to an actual service, the complex structures of networked services are hidden from the users of the VPN, who still can pick and choose from what services they want to utilise in their own view of the network. By virtual service is here meant that that for the clients of the virtual network who access the service will experience the service as being a part of the emulated network, and will only experience the logic of the service. The actual service may however be located outside the VPN. For administrators, the benefits are that the administrative interfaces for a service stays the same, even if the service itself is replaced with a different actual implementation of the service.

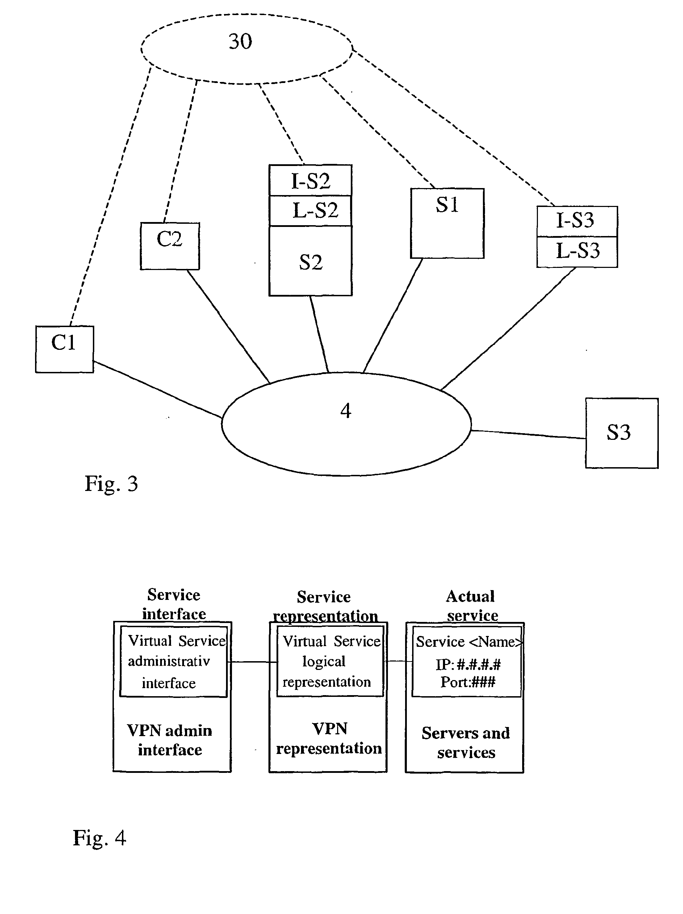

An example of an embodiment of the present invention is illustrated in Fig. 3, wherein dashed lines indicate connections in the virtual private network 30, and full lines indicate connections to the global network 4, preferably an IP network. In the disclosed embodiment the service "DHCP server", for example, may reside on a physical server machine S1 arranged and accessible inside the VPN 30, according to the prior art. According to the invention, it would also be possible to implement it in the control logic of the VPN instead, which normally would change the way configuring the DHCP server should be done. If a DHCP server S2 has a logical representation Logrep-S2 as well as a virtual administrative interface I-S2, the underlying service S2 could be replaced without changing the way the system administrator configures the system.

The system according to the present invention uses a concept where a network service, be it an access method or access rule or any IP/ IPv6 service, is represented as a sub-component S2,S3 of the VPN itself, and therefore may be added or removed from the VPN in a very intuitive way, e.g. using a drag-and-drop scheme, or using a simple set of configuration options in a configuration file. The Virtual service is configured to be seen as a part of a VPN, but it's corresponding actual service might be:
- an integrated service in the VPN technology used;
- a service running on a machine S2 currently connected to the VPN;
- a service running on a server S3 outside the VPN, where special access rules define how it might be accessed and by whom;
- any service to which there could exist a mapping that would let it appear as if it is part of the VPN itself.

As illustrated in Fig. 3, a service located on such a server S3 which is connected to the global network 4, e.g. the Internet, but which is not part of the VPN 30, may be used by the VPN clients C1,C2, by making use of the present invention. A logical representation Logrep-S3 provides the virtual service, and is mapped to the actual service in S3. The logical representation Logrep-S3 is connected to a virtual administrative interface I-S3, making it accessible for the VPN clients C1,C2. This embodiment too has the benefit of making replacements in the actual service without having to change the way the system administrator configures the system.

Fig. 4 illustrates schematically how a service is made available to a client of the VPN. The actual service is represented by a Virtual Service Logical representation, to which an administrative interface is bound. The administrative interface may be set up to allow users to perform some administrative functions themselves, such as subscribing/unsubscribing themselves to certain services.

The invention may be used in any VPN technology that allows the administrators of the VPN to define access rules per networked service. There also has to exist a way to map a service definition within the VPN to generic services that might or might not exist within the VPN. The logical mapping between the Virtual Service and the actual service allows easy administration of services for the VPN administrators. The logical mapping could also be used to provide a common interface to the services, providing a "single sign-on" functionality. When configuring multiple services or servers, each service normally uses its own authentication scheme. A single sing-on scheme lets the administrator sign on once to a common authentication service, which then is used to authenticate the user to all other services.

The system according to the present invention differs from earlier known technology in that normally, a VPN is seen as a network strictly detached from the underlying physical network, i.e. the global network as seen in Fig. 3. By allowing exceptions from this rule, where the exceptions are part of the VPN control logic, services and their access methods may be defined within the VPN configuration structure itself. This, in turn, allows for the possibility of defining a high level abstraction of what really defines a service, in a way that makes VPN configuration and management much more manageable. This provides a unified view for every service, independent of the actual service implementation. Also, the modular control architecture enables dynamic bundling of user specific services on top of the basic VPN service.

## Claims

1. System for providing a service to a client (C1,C2) in a virtual network (30) residing on but being logically separated from a physical network (4), in which system a network service is located in a server (S2,S3), **characterised in that** a logical representation (L-S2,L-S3) of the network service is provided, and connected to the virtual network by a virtual administrative interface (I-S2,I-S3), wherein said logical representation includes a mapping to the network service, thereby representing a virtual service accessible to said client, where said logical representation represents a service independently of whether the service is running on a server that is physically connected to the virtual network or connected to the virtual network via said logical representation, wherein special access rules that are part of said virtual network define how the services might be accessed and by whom.

2. The system as recited in claim 1, wherein said administrative interface allows for configuration of access rules that define how said clients are allowed to access said virtual services.

3. The system as recited in claim 1, wherein said logical representation makes said network service replaceable without changing the configuration of the virtual network system, where one example of configuration would be access rules.

4. The system as recited in claim 1, wherein said logical representation is configured to be experienced by said client as a network service inside the virtual network.

5. The system as recited in claim 1, wherein said logical representation is connected to said server through said physical network.

6. The system as recited in claim 2, wherein said virtual administrative interface is configured to allow client users to perform predetermined administrative functions themselves, such as subscribing/unsubscribing themselves to certain services.

7. The system as recited in any of the previous claims, wherein said physical network is for example an Internet Protocol network.

## Patentansprüche

1. System zum Bereitstellen eines Dienstes für einen Client (C1, C2) in einem virtuellen Netzwerk (30), das sich auf einem physikalischen Netzwerk (4) befindet, aber logisch getrennt von diesem ist, wobei sich in diesem System ein Netzwerkdienst in einem Server (S2, S3) befindet, **dadurch gekennzeichnet, dass** eine logische Repräsentierung (L-S2, L-S3) des Netzwerkdienstes bereitgestellt wird, und verbunden ist mit dem virtuellen Netzwerk durch eine virtuelle administrative Schnittstelle (I-S2, I-S3), wobei die logische Repräsentierung ein Abbilden auf den Netzwerkdienst enthält, womit ein virtueller Dienst repräsentiert wird, auf den von dem Client zugegriffen werden kann, wobei die logische Repräsentierung einen Dienst repräsentiert, unabhängig davon, ob der Dienst auf einem Server abläuft, der physikalisch mit dem virtuellen Netzwerk verbunden ist oder über die logische Repräsentierung mit dem virtuellen Netzwerk verbunden ist, wobei spezielle Zugangsregeln, die Teil des virtuellen Netzwerks sind, definieren, wie auf die Dienste zugegriffen werden kann und durch wen.

2. Das System, wie in Anspruch 1 dargelegt, wobei die administrative Schnittstelle eine Konfigurierung von Zugangsregeln erlaubt, die definieren, wie den Clients erlaubt wird, auf die virtuellen Dienste zuzugreifen.

3. Das System, wie in Anspruch 1 dargelegt, wobei die logische Repräsentierung den Netzwerkdienst ersetzbar macht ohne Ändern der Konfiguration des virtuellen Netzwerksystems, wobei ein Beispiel der Konfiguration Zugangsregeln sein würden.

4. Das System, wie in Anspruch 1 dargelegt, wobei die logische Repräsentierung konfiguriert ist, von dem Client erfahren zu werden als ein Netzwerkdienst innerhalb des virtuellen Netzwerks.

5. Das System, wie in Anspruch 1 dargelegt, wobei die logische Repräsentierung verbunden ist mit dem Server durch das physikalische Netzwerk.

6. Das System, wie in Anspruch 2 dargelegt, wobei die virtuelle administrative Schnittstelle konfiguriert ist, um Client-Benutzer zu erlauben, vorbestimmte administrative Funktionen selbst auszuführen, wie zum Beispiel ein Subskribieren/Desubskribieren von sich selbst bei gewissen Diensten.

7. Das System, wie in einem der vorherigen Ansprüche dargelegt, wobei das physikalische Netzwerk zum Beispiel ein Internet-Protokoll-Netzwerk ist.

## Revendications

1. Système pour fournir un service à un client (C1, C2) dans un réseau virtuel (30) résidant sur mais étant logiquement séparé d'un réseau physique (4), système dans lequel un service réseau est situé dans un serveur (S2, S3), **caractérisé en ce qu'**il est fourni une représentation logique (L-S, L-S3) du service réseau, et connectée au réseau virtuel par une interface administrative virtuelle (I-S2, I-S3), dans lequel ladite représentation logique comprend un mappage du service réseau, représentant ainsi un service virtuel accessible audit client, dans lequel ladite représentation logique représente un service indépendamment du fait que le service fonctionne sur un serveur qui est physiquement connecté au réseau virtuel ou connecté à ladite représentation logique, dans lequel les règles d'accès spéciales qui font partie dudit réseau virtuel définissent la manière dont on peut avoir accès aux services et qui peut avoir accès aux services.

2. Système selon la revendication 1, dans lequel ladite interface administrative permet une configuration des règles d'accès qui définissent la manière dont lesdits clients peuvent avoir accès auxdits services virtuels.

3. Système selon la revendication 1, dans lequel ladite représentation logique rend ledit service réseau remplaçable sans modifier la configuration du système de réseau virtuel, dans lequel un exemple de configuration serait les règles d'accès.

4. Système selon la revendication 1, dans lequel ladite représentation logique est configurée pour être ressentie par ledit client comme étant un service réseau à l'intérieur du réseau virtuel.

5. Système selon la revendication 1, dans lequel ladite représentation logique est connectée audit serveur par le biais dudit réseau physique.

6. Système selon la revendication 2, dans lequel ladite interface administrative virtuelle est configurée pour permettre aux utilisateurs clients d'effectuer eux-mêmes des fonctions administratives prédéterminées, telles que l'abonnement/désabonnement à certains services par eux-mêmes.

7. Système tel que défini dans l'une quelconque des revendications précédentes, dans lequel ledit réseau physique est, par exemple, un réseau de protocole Internet.
